# EUROPÄISCHE PATENTSCHRIFT

(11) **EP 1 524 608 B1**
(45) Veröffentlichungstag und Bekanntmachung des Hinweises auf die Patenterteilung: **21.01.2009**
(21) Anmeldenummer: 04019004.3
(22) Anmeldetag: 11.08.2004
(51) Int. Cl.: G06F 17/30, H04L 29/06

(54) **Kommunikationssystem zur Verwaltung und Bereitstellung von Daten**
Communication system for managing and providing data
Système de communication pour la gestion et la mise à disposition de données

(30) Priorität: 23.09.2003 DE 10345016
(43) Veröffentlichungstag der Anmeldung: 20.04.2005
(73) Patentinhaber: Deutsche Telekom AG, 53113 Bonn (DE)
(72) Erfinder: Fehse, Michael, 64569 Nauheim (DE)

(56) Entgegenhaltungen:
- WO-A-02/37224
- US-A1- 2003 126 297
- "Cisco Introduces the Cisco SN 5428 Storage Router" 14. Mai 2002 (2002-05-14), ANNOUNCEMENT CISCO SYSTEMS, PAGE(S) 1-3 , XP002246764 * Seite 1 *

## Beschreibung

Die Erfindung betrifft ein Kommunikationssystem zur Verwaltung und Bereitstellung von Daten in Rechnerverbünden.

Im Zeitalter der Informationstechnologie spielen das Sammeln, Verarbeiten und Verteilen von Informationen eine besondere Rolle. Mit Hilfe von örtlich begrenzten Computernetzen (LAN, MAN), Weitverkehrs-Computernetzen (WAN) sowie eines Verbundes aus einzelnen Computernetzen, beispielsweise das Internet, ist es möglich, einer großen Anzahl an Benutzern jede auf einem Datenträger gespeicherte Information verfügbar zu machen. Obwohl die vorhandenen Informationen beliebig vielen Benutzern zur Verfügung gestellt werden sollen, ist es bisher nicht gelungen, einheitliche Standards hinsichtlich der Übertragungstechnologie, Netzzugriffsprotokolle, Computerschnittstellen und dergleichen zu finden. Vielmehr zeichnen sich Rechnerverbünde dadurch aus, dass heterogene Subnetze sowie Hardware- und Softwarekomponenten von verschiedenen Herstellern verwendet werden, so dass ein transparenter Datenaustausch nicht ohne Zwischenschaltung geeigneter Anpassungs- und Umsetzungseinrichtungen, beispielsweise in Form von Gateways und Bridges möglich ist.

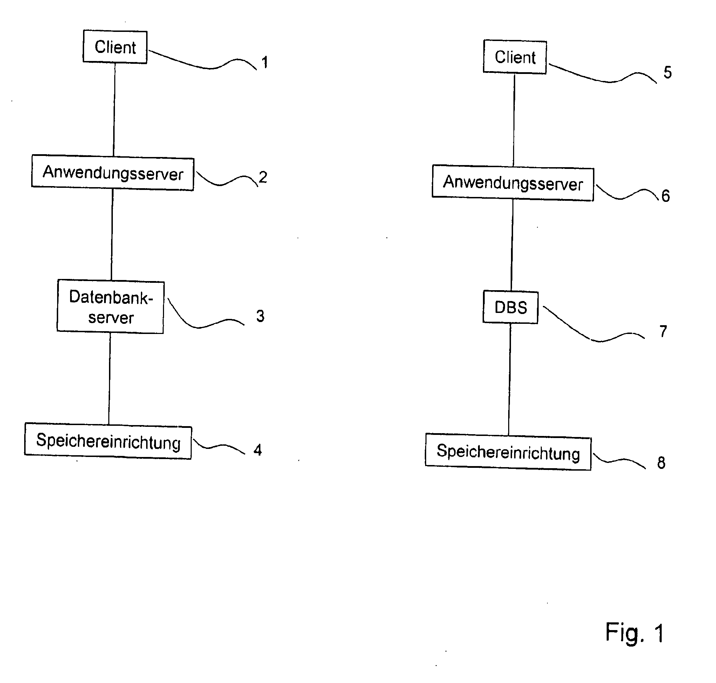

Darüber hinaus gibt es sogenannte dedizierte Rechnersysteme, bei denen jedem Anwendungsserver (englisch: Application Server) über einen Datenbankserver eine Speichereinrichtung in Form einer Datenbank oder verteilter Datenbanken zugeordnet ist. Ein solches Rechnersystem ist in Fig. 1 dargestellt. Wie Fig. 1 zeigt, ist ein Client 1 über einen Anwendungsserver 2 und einen Datenbankserver 3 fest einer Speichereinrichtung 4 zugeordnet. Ein zweites dediziertes Rechnersystem umfasst einen Client 5, der über einen Anwendungsserver 6, einen Datenbankserver (DBS) 7 fest einer Speichereinrichtung 8 zugeordnet ist. In solchen dedizierten Computerumgebungen kann ein transparenter Datenfluss leicht ermöglicht werden, indem geeignete Anpassungs- oder Schnittstelleneinrichtungen in dem Anwendungsserver, dem Datenbankserver und/oder der Datenbank verwendet, oder nur Komponenten desselben Herstellers verwendet werden. Allerdings kann in solchen dedizierten Systemen beispielsweise der Anwendungsserver 2 nicht auf die Speichereinrichtung 8, oder der Anwendungsserver 6 auf die Speichereinrichtung 4 zugreifen.

Aus der WO 02/37224 A ist ein Speicherverwaltungssystem bekannt, bei dem IP-basierte Anwendungsserver, welche iSCSI- und/oder NFS/CIFS-Schnittstellen aufweisen, über eine Verwaltungseinrichtung auf IP-basierte und/oder FC (Fiber Channel)-basierte Speichersystem zugreifen können.

Der vorliegenden Erfindung liegt die Aufgabe zugrunde, ein Kommunikationssystem zur Verfügung zu stellen, welches ein virtuelles Datenmanagement ermöglicht, bei dem Anwendungsservern Daten übergeben werden, ohne dass die Anwendungsserver über die beteiligten Speichereinrichtungen in Kenntnis gesetzt werden müssen. Gleichzeitig können die eingesetzten Speichereinrichtungen Anwendiangsservern ihre Dienste flexibler und effiziente zur Verfügung stellen.

Ein Kerngedanke der Erfindung ist darin zu sehen, wenigstens eine Datenverwaltungseinrichtung, die in der Regel ein Rechnerverbund ist, bereitzustellen, welche eine Datenabstraktionsschicht zu Anwendungsservern, die mit der Datenverwaltungseinrichtung verbunden werden können, bildet. Die Datenabstraktionsschicht der Datenwerwaltungseinrichtung sorgt dafür, dass sich die Anwendungsserver nicht mehr darum kümmern müssen, in welchen Speicherplätzen einer oder mehrerer Datenbanken die angeforderten Daten liegen und in welchem Format die Daten vorliegen. Vielmehr genügt es, dass ein Anwendungsserver hinsichtlich einer durchzuführenden Anwendung die dazu erforderlichen Daten anfordert, die ihm über die Datenabstraktionsschicht dann als komplette Nachricht zur Verfügung gestellt werden. Das Sammeln, Verteilen, Umsetzer, und geordnete Speichern von Daten, mithin die gesamte Datenverwaltung, übernimmt die Datenverwaltungseinrichtung.

Obwohl die Datenverwaltungseinrichtung ein mehrere Teilnetze umfassender Rechnerverbund sein kann, kann man hinsichtlich des gesamten Kommunikationssystem von einer zentralen Einrichtung sprechen.

Das oben genannte technische Problem wird durch ein Kommunikationssystem zur Verwaltung und Bereitstellung von Daten in einer Kommuhikationsumgebung gemäß Anspruch 1 gelöst.

Die Kommunikationsumgebung weist wenigstens eine Datenverwaltungseinrichtung, mehrere Anwendungsserver, die über unterschiedliche Kommunikationsprotokolle mit der Datenverwaltungseinrichtung kommunizieren können, und auf FC (Fiber-Channel)- und IP (Internet-Protocol)- Technologie basierende Speichereinrichtungen auf. An dieser Stelle sei erwähnt, dass es sich bei einer Speichereinrichtung um eine einzelne Datenbank, um verteilte Datenbanken oder um ganze Speichernetze handeln kann.

Hierzu fordert ein Anwendungsserver unter Verwendung eines definierten Kommunikationsprotokolls, wie zum Beispiel dem Internet Protokoll (IP) oder dem auf dem Fiber Channel (FC) basierenden Protokoll, Daten für eine auszuführende Anwendung an, wobei die Daten auf mehreren, verschiedenartig ausgebildeten Speichereinrichtungen verteilt sein können. Die angeforderten Daten werden unabhängig vom verwendeten Kommunikationsprotokoll des Anwendungsservers aus wenigstens einer Speichereinrichtung ausgelesen und unter Verwendung des Kommunikationsprotokolls des Daten-anfordernden Anwendungsservers über die Datenverwaltungseinrichtung zu diesem zur weiteren Verwendung übertragen. Auf diese Weise bildet die Datenverwaltungseinrichtung eine Datenabstraktionsschicht für die auf die Datenverwaltungseinrichtung zugreifenden Anwendungsserver. Denn mit Hilfe der Datenverwaltungseinrichtung werden einem Anwendungsserver die angeforderten Daten "mundgerecht" übermittelt.

Um eine Speicherverwaltung zu ermöglichen, kann die Datenverwaltungseinrichtung freie und belegte Speicherplätze der verwendeten Speichereinrichtungen auf einen virtuellen Speicher, auch Datenpool genannt, abbilden. Auf diese Weise kann eine Optimierung der verwendeten Speichereinrichtungen erreicht werden, da die Datenverwaltungseinrichtung Kenntnis davon hat, wieviel freier Speicherplatz insgesamt und/oder in den jeweiligen Speichereinrichtungen zur Verfügung steht.

Die Datenverwaltungseinrichtung ist demzufolge in der Lage, abzuspeichernde Daten optimal entsprechend dem geforderten Speicherplatz auf einer bestimmten Speichereinrichtung abzulegen, oder auf mehrere Speichereinrichtungen gezielt zu verteilten.

Darüber hinaus ist es möglich, die Speicherkapazität einer oder mehrerer Speichereinrichtungen in Abhängigkeit von der Auslastung der übrigen Speichereinrichtungen virtuell zu verändern; insbesondere zu vergrößern. So ist es sogar während des Betriebs möglich, die Speicherkapazität einer Speichereinrichtung auf Anfrage hin zu vergrößern, wenn in einer oder mehreren anderen Speichereinrichtungen ausreichend freier Speicherplatz zur Verfügung steht.

Um Datensicherungen, auch während des Betriebs, durchführen zu können, kann die Datenverwaltungseinrichtung Daten auf den angeschalteten und möglicherweise weit verteilten Speichereinrichtungen gemäß dem als RAID (Redundant Area of Inexpensive Disks) bekannten Speicherarchitekturkonzept sichern. Die als RAID bekannte Speicherarchitektur wird vornehmlich in einem einzelnen Server verwendet, indem die zu sichernden Daten in kleine Blöcke aufgeteilt und über mehrere Speicherplatten verteilt werden. Mit Hilfe der Datenverwaltungseinrichtung können somit die angeschalteten, gewöhnlich weiträumig verteilten Speichereinrichtungen wie einzelne, in einem Computergehäuse untergebrachte Speicherplatten verwaltet werden. Eine als Mirroring (Spiegelung) bezeichnete Speicherarchitektur, bei der eine hundertprozentige Redundanz der Daten erzeugt wird, ist somit nicht notwendig, aber dennoch möglich.

Gemäß einer vorteilhaften Weiterbildung kann eine Datensicherung für eine auf einem Anwendungsserver laufende Anwendung, auch im Betrieb, auf einer externen Datensicherungseinrichtung, beispielsweise einem Bandgerät, unter Steuerung der Datenverwaltungseinrichtung vorgenommen werden. Ein solcher Datensicherungsbetrieb ist auch als Backup-Betrieb bekannt. Sichern und Rückspeichern der gesicherten Daten ist somit von der Anwendung unabhängig und transparent.

Das Kommunikationssystem umfasst eine Datenverwaltungseinrichturtg, mehrere-Anwendungsserver, die über verschiedene Schnittstellen auf die Datenverwaltungseinrichtung zugreifen können, sowie mehrere auf FC (Fiber-Channel)- und IP- (Internet-Protocol)-Technologie basierende Speichereinrichtungen, die mit der Datenverwaltungseinrichtung in Verbindung stehen. Die Datenverwaltungseinrichtung weist eine erste FC-Vermittlungseinrichtung (Englisch: Fiber-Channel-Switch) auf, die wenigstens einem Anwendungsserver mit FC-basierter Schnittstelle zugeordnet ist. Ferner ist eine erste IP-Vermittlungseinrichtung (englisch: Internet-Protokcol-Switch) vorgesehen, die wenigstens einem Anwendungsserver mit IP-basierter Schnittstelle zugeordnet ist. Eine zweite FC-Vermittlungseinrichtung ist wenigstens einer auf einer FC-Technologie basierenden Speichereinrichtung zugeordnet. Eine Anpassungseinrichtung dient dem Anpassen der von der ersten IP- Vermittlungseinrichtung kommenden Daten an das Datenformat der zweiten FC-Vermittlungseinrichtung und umgekehrt.

Die der ersten IP-Vermittlungseinrichtung zugeordneten Anwendungsserver können eine beliebige Datenbank-, zum Beispiel DB2-, iSCSI (Internet Small Computer System Interface over IP)-, eine CIFS (Common Internet File System)-, NFS-, SOAP/XML (Simple Object Access Protocol/Extensible Markup Language)- und/oder eine J2EE (Java 2 Platform Enterprise Edition)-Schnittstelle aufweisen. Diesen Schnittstellen oder Protokollen ist gemein, dass sie Daten unter Verwendung des IP-Protokolls übertragen und empfangen können.

In einer bevorzugten Ausführungsform ist ein Datenbank (DB)-, J2EE- und SOAP-Router vorgesehen, die mit der ersten IP-Vermittlungseinrichtung verbunden sind, wobei den Routern jeweils mindestens ein entsprechender Server zugeordnet ist, die wiederum mit der Anpassungseinrichtung verbunden sind.

Die Anpassungseinrichtung kann ein Dateiserver (Englisch: Filer) sein, und zwar beispielsweise ein Filer der Firma Network Appliance. Ein solcher Filer ist unter anderem in der Lage, IP-Protokolle und FC-Protokolle derart anzupassen, dass beispielsweise ein über eine iSCSI-Schnittstelle an die Datenverwaltungseinrichtung angeschalteter Anwendungsserver Daten, die in einer FC-basierten Speichereinrichtung abgelegt sind, übertragen werden kann.

Vorteilhafterweise weist die Datenverwaltungseinrichtung einen Datenbankserver auf, der als J2EE-Server fungieren kann. Auf diese Weise kann die Datenverwaltungseinrichtung Nutzern WEB-basierte Unternehmensanwendungen bereitstellen.

Die erfindungsgemäße Datenverwaltungseinrichtung, die wie gesagt einen Rechnerverbund darstellen kann, kann aus bekannten Datenbankservern, Netzen, Vermittlungseinrichtungen, Dateiservern und dergleichen aufgebaut werden.

Um eine Datensicherung zu ermöglichen, ist der zweiten FC-Vermittlungseinrichtung wenigstens eine Datensicherungseinrichtung zugeordnet. Die Datenverwaltungseinrichtung ist derart ausgebildet, dass während des Betriebs eines Anwendungsservers Datensicherungen über die Datensicherungseinrichtung durchgeführt werden können.

Die Datenverwaltungseinrichtung weist eine Steuerungs- und/oder Verwaltungseinheit auf, die insbesondere zum Wiederherstellen von Daten, zur Protokollierung des Datenverkehrs zwischen Anwenderservern und Speichereinrichtungen, zur Abrechnung bereitgestellter Dienste und zur Optimierung der Speichereinrichtungen ausgebildet ist. Die Datenverwaltungseinrichtung kann unter Ansprechen auf vorbestimmte Regeln die entsprechende Verwaltung automatisch ausführen.

Um die Flexibilität des Kommunikationssystems zu erhöhen, kann die Datenverwaltungseinrichtung eine zweite IP-Vermittlungseinrichtung aufweisen, die auf IP-Technologie basierenden Speichereinrichtungen zugeordnet ist. Ferner ist eine Anpassungseinrichtung vorgesehen, die zum Anpassen der von der ersten FC-Vermittlungseinrichtung kommenden Daten an das Datenformat der zweiten IP-Vermittlungseinrichtung und umgekehrt ausgebildet ist.

Die Anpassungseinrichtungen können in getrennten Dateiservern oder in dem oben erwähnten Dateiserver implementiert sein.

Dank der Erfindung ist es möglich, starre Zuordnungen zwischen einem Anwendungsserver und einer Datenbank aufzuheben, indem nunmehr verschiedene Anwendungsserver (Application Server) auf gemischte Speicherumgebungen, die auf der FC- oder iP-Technologie basieren können, zugreifen können. Mit anderen Worten ermöglicht die Datenverwaltungseinrichtung ein virtuelles Datenmanagement, bei dem Anwendungsservern Daten übergeben werden, ohne dass der Anwendungsserver über die beteiligten Speichereinrichtungen in Kenntnis gesetzt werden muss. Das bedeutet ferner, dass die eingesetzten Speichereinrichtungen flexibler, effizienter und kostengünstiger ihre Dienste Anwendungsservern zur Verfügung stellen können.

Die Erfindung wird nachfolgend anhand von Ausführungsbeispielen in Verbindung mit den beiliegenden Zeichnungen näher erläutert.
Es zeigen:
- Fig. 1: eine herkömmliche Kommunikationsarchitektur, bei der zwei Anwendungsserver jeweils starr einer Speichereinrichtung zugeordnet ist, und
- Fig. 2: eine verschiedene Anwendungsserver und Speichereinrichtungen aufweisendes Kommunikationssystem, in dem die Erfindung verwirklicht ist.

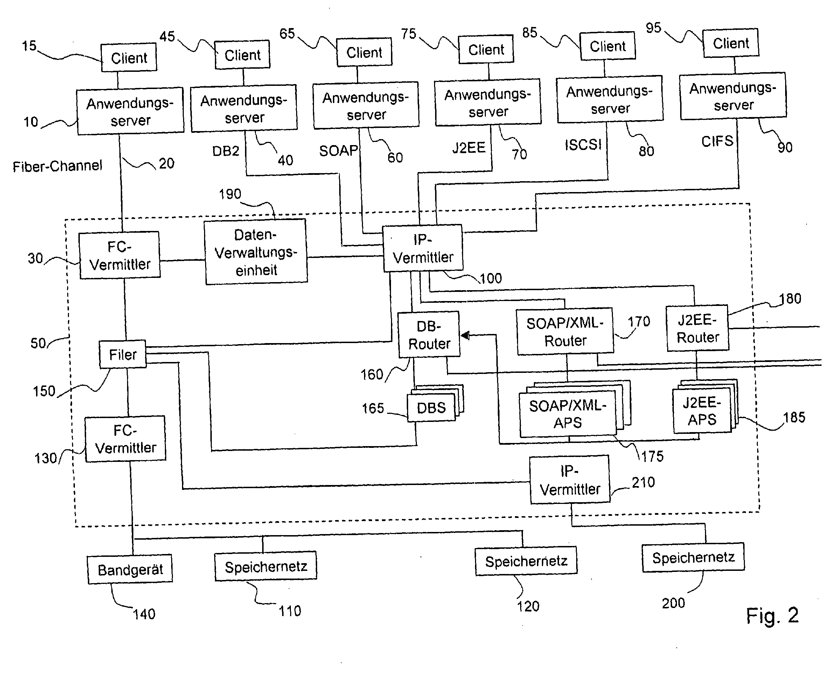

In Fig. 2 ist eine Kommunikationsumgebung dargestellt, die einen Anwendungsserver 10 aufweist, der über eine FC-Schnittstelle verfügt. Dem Anwendungsserver 10 kann ein Client 15 zugeordnet sein. Der Anwendungsserver 10 ist über einen Fiber-Channel 20 mit einem FC-Vermittler 30 verbunden.

Der FC-Vermittler 30 ist Teil eines beispielhaft dargestellten Computernetzes, welches nachfolgend zentrale Datenverwaltungseinrichtung 50 genannt wird. Die Kommunikationsumgebung weist ferner einen Anwendungsserver 40 mit einer DB2-Schnittstelle auf. Ein Anwendungsserver 60 weist eine sogenannte SOAP/XML-Schnittstelle auf, wohingegen ein Anwendungsserver 70 eine J2EE-Schnittstelle aufweist. Ein weiterer Anwendungsserver 80 kann vorgesehen sein, welcher über eine iSCSI-Schnittstelle verfügt. In einem weiteren Anwendungsserver 90 ist eine CIFS-Schnittstelle implemetiert. Den Anwendungsservern 40, 60, 70, 80 und 90 sind beispielsweise Clients 45, 65, 75, 85 bzw. 95 zugeordnet. Die Anwendungsserver 40, 60, 70, 80, 90 zeichnen sich dadurch aus, dass sie Daten über das Internet Protokoll (IP) mit einem IP-Vermittler 100 der zentralen Datenverwaltungseinrichtung 50 austauschen können.

Der FC-Vermittler 30 und der IP-Vermittler 100 der Datenverwaltungseinrichtung 50 bilden unter anderem eine sogenannte Datenabstraktionsschicht, über die den zugeordneten Anwendungsservern 10, 40, 60, 70, 80 und 90 angeforderte Daten übergeben werden. Die Daten können in verschiedenen Speichereinrichtungen abgelegt sein. In unserem Beispiel bilden die Speichereinrichtungen Speichernetze 110, 120 und 200. Eine Speichereinrichtung kann auch eine einzelne Datenbank sein. Bei den Speichernetzen 110 und 120 kann es sich um bekannte Speichernetze handeln, die auf der Fiber-Channel-Technologie aufgebaut sind. Demzufolge sind die Speichernetze 110 und 120 mit einem FC-Vermittler 130 der zentralen Datenverwaltungseinrichtung 50 verbunden. Das Speichernetz 200 kann auf einer IP-Technologie aufgebaut sind. Demzufolge ist das Speichernetz 200 mit einem IP-Vermittler 210 der zentralen Datenverwaltungseinrichtung 50 verbunden. Der IP-Vermittler 210 ist wiederum an den Filer 150 angeschlossen. Der Filer 150 dient auch als Umsetzer von FC-basierten Datenformaten in IP-basierte Datenformate und umgekehrt.

An den FC-Vermittler 130 kann ferner ein Bandgerät 140 angeschlossen sein, welches für die erforderliche Datensicherung sorgt.

Damit sich die Anwendungsserver 10, 40, 60, 70, 80 und 90 nicht über die Technologie und die Struktur der verwendeten Speichernetze 110, 120 und 200 und auch nicht um die jeweiligen Datenformate kümmern müssen, ist der IP-Vermittler 100 mit dem Dateiserver 150, auch Filer genannt, verbunden. Der Filer 150 hat unter anderem die Aufgabe, die von einem der Anwendungsserver kommenden Anforderungen zu verarbeiten und an den FC-Vermittler 130 weiterzuleiten, der dann die angeforderten Daten aus den Speichernetzen 110 und 120 ausliest und über den Filer 150 dem FC-Vermittler 30 öder dem IP-Vermittler 100 zuführt. Der FC-Vermittler 30 oder der IP-Vermittler 100 übermitteln dann die Daten an den Datenanfordernden Anwendungsserver.

Damit auch der über eine SOAP/XML-Schnittstelle angeschaltete Anwendungsserver 60, der über die J2EE-Schnisstelle angeschaltete Anwendungsserver 70 und der über die DB2-Schnittstelle angeschaltete Anwendungsserver 40 auf Daten zugreifen können, die in den auf der FC-Technologie basierten Speichernetzen 110, 120 abgelegt sind, ist dem IP-Vermittler 100 ein DB-Router 160, ein SOAP und/oder XML-Router 170 sowie ein J2EE-Router 180 zugeordnet; dem DB-Router ist wiederum mindestens ein Datenbankserver 165, dem SOAP/XML-Router 170 mindestens ein SOAP/XML-Applikationsserver 175 und dem J2EE-Router 180 mindestens ein J2EE-Applikationsserver 185 zugeordnet. Die Applikationsserver 175 und 185 sind mit dem DB-Router 160 verbunden, wohingegen der Datenbankserver 165 mit dem Filer 150 verbunden ist. Der SOAP/XML-Applikationsserver 175 und der J2EE-Applikationsserver 185 sind ebenfalls mit dem DB-Router 160 verbunden. Der DB-Router 160 wertet in Verbindung mit den zugeordneten Datenbankservern 165 Anforderungssignale des Anwendungsserver 40 sowie Anforderungssignale der Applikationsserver 175 und 185 aus, um über den Filer 150 und den FC-Vermittler 130 oder den IP-Vermittler 210 die auf den Speichernetzen 110, 120 und/oder 200 verteilten Daten auslesen und dem anfordernden Anwendungsserver zur Verfügung stellen zu können.

Können die Anforderungssignale an den DB-Router 160, den SOAP/XML-Router 170 und/oder an den J2EE-Router 180 nicht verarbeitet werden, können die Anforderungssignale an eine andere Datenverwaltungseinrichtung (nicht dargestellt) weitergeleitet werden.

Eine in der zentralen Datenverarbeitungseinrichtung 50 implementierte Datenverwaltungseinheit 190 ist mit den Komponenten der Datenverarbeitungseinrichtung 50 verbunden. Die Datenverwaltungseinheit 190 dient unter anderem dazu, eine Datensicherung auf dem Bandgerät 140 während des Ausführens einer Anwendung auf einem oder mehreren der Anwendungsserver durchzuführen. Weitere Aufgaben der Datenverwaltungseinheit 190 sind beispielsweise das Wiederherstellen von Daten, das Protokollieren von Datenkommunikationen, die Verwaltung und Optimierung der Speichernetze 110, 120 und 200. Zum Beispiel sorgt die Datenverwaltungseinheit 190 dafür, dass im Betrieb die Speicherkapazität des Speichernetzes 110 dadurch vergrößert wird, dass freier Speicherplatz in den Speichernetzen 120 und 200 für das Speichernetz 110 bereitgestellt wird. Hierzu werden die freien und besetzten Speicherplätze der Speichernetze 110, 120 und 200 in einem virtuellen Speicher, der beispielsweise in der Datenverwaltungseinheit 190 erzeugt wird, abgebildet.

Die Datenverwaltungseinheit 190 ist ferner dazu ausgebildet, Kommunikationsdatensätze zu erzeugen, um kostenpflichtige Dienste erfassen und dem Nutzer eines Anwendungsservers in Rechnung stellen zu können. Technische Änderungen der zentralen Datenverwaltungseinrichtung sowie das Hinzufügen oder Entfernen weiterer Anwendungsserver und Speichernetze werden ebenfalls in der Datenverwaltungseinheit 190 registriert. Die Steuerung des Bandgerätes 140 kann auch über die Datenverwaltungseinheit 190 erfolgen. An dieser Stelle sei darauf hingewiesen, dass die Datenverwaltungseinheit 190 ein Verbund aus Rechnern sein kann, und nicht ein einzelner Computer sein muss. Weitere Aufgaben der Datenverwaltüngseinheit 190 können darin bestehen, bestehende Verbindungen zwischen einem Anwendungsserver und der zentralen Datenverwaltungseinrichtung 50 zu protokollieren, verloren gegangene Daten in den Speichernetzen wieder herzustellen sowie Datenanalysen vorzunehmen, um Entscheidungen treffen zu können. Die Datenverwaltungseinheit 190 kann demzufolge mit einer geeigneten künstlichen Intelligenz ausgestattet, d. h. als Expertensystem ausgebildet sein.

Die Datenverwaltungseinrichtung 50 ermöglicht es ferner, Daten gesichert in den Speichernetzen zu archivieren.

Nachfolgend wird ein Anwendungsfall für die in Fig. 2 dargestellte zentrale Datenverwaltungseinrichtung 50 erläutert.

Es sei angenommen, dass der Benutzer des Clients 65 eine Autoversicherung abschließen möchte. Der Benutzer ist deshalb daran interessiert, das preisgünstigste Angebot zu erhalten. Über den dem Client 65 zugeordneten Anwendungsserver 60 wird eine entsprechende Anforderung "Preisgünstigste Autoversicherung" über den IP-Vermittler 100 der zentralen Datenverwaltungseinrichtung 50 übertragen. Der IP-Vermittler 100 sendet das Anforderungssignal zum SOAP/XML-Router 170, der ermittelt, welcher SOAP/XML-Applikationsserver 175 das Anforderungssignal verarbeiten kann. Ohne dass der Anwendungsserver 10 davon Kenntnis hat, in welchen Datenbanken oder in welchen Speichernetzen relevante Autoversicherungsdaten abgelegt sind, veranlasst der SOAP/XML-Applikationsserver 175 automatisch den Filer 150 mittels des DB-Servers 165, die entsprechenden Daten aus dem Speichernetz 200 und aus den Speichernetzen 110 und 120 auszulesen.

Der SOAP/XML-Applikationsserver 175 ist derart ausgebildet, dass er aus den empfangenen Daten die kostengünstigste Autoversicherung auswählen kann. Die entsprechenden Daten werden anschließend über den IP-Vermittler 100 in einem vorbestimmten Format zum Anwendungsserver 60 und schließlich zum Client 65 übermittelt, welches der Anwendungsserver 60 verarbeiten kann. Aus der Sicht des Anwendungsservers 60 bildet die Datenverwaltungseinrichtung 50 eine Datenabstraktionsschicht, die dem Anwendungsserver 60 die gewünschten Daten zur Verfügung stellt, ohne dass sich der Anwendungsserver 60 darum kümmern muss, an welchen Orten und in welchem Format die ihn interessierenden Daten abgelegt sind.

Die zentrale Datenverwaltungseinrichtung 50 ist somit in der Lage, den angeschlossenen Anwendungsservern 10, 40, 60, 70, 80, 90 eine einzige virtuelle Datenbank anzubieten. Denn die zentrale Datenverwaltungseinrichtung 50 ist derart ausgebildet, dass sie beliebig verteilte Datenbanken, auch von unterschiedlichen Hersteller, sowie Speichernetze, die auf unterschiedlichen Übertragungstechnologien basieren können, verwalten und jedem angeschalteten Anwendungsserver angeforderte Daten in dem Format zur Verfügung stellen kann, welches von der jeweiligen Schnittstelle des entsprechenden Anwendungsservers verarbeitet werden kann.

## Patentansprüche

1. Kommunikationssystem zur Verwaltung und Bereitstellung von Daten, mit
wenigstens einer Datenverwaltungseinrichtung (50), mehreren Clients (15, 45, 65, 75, 85, 95),
die jeweils mit einem Anwendungsserver (10, 40, 60, 70, 80, 90), die über eine FC-basierte Schnittstelle oder über eine IP-basierte Schnittstelle auf die Datenverwaltungseinrichtung (50) zugreifen können, verbunden sind,
mehreren auf FC (Fiber-Channel)- und IP (Internet Protocol)-Technologie basierenden Speichereinrichtungen (110, 120, 140, 200), die mit der Datenverwaltungseinrichtung (50) in Verbindung stehen, wobei die Datenverwaltungseinrichtung (50) folgende Merkmale aufweist:
eine erste FC-Vermittlungseinrichtung (30), die wenigstens einem Anwendungsserver (10) mit FC-basierter Schnittstelle zugeordnet ist,
eine erste IP-Vermittlungseinrichtung (100), die einem Anwendungsserver (40) mit einer Datenbank-Schnittstelle, einem Anwendungsserver (60) mit einer SOAP/XML- Schnittstelle und einem Anwendungsserver (70) mit einer J2EE-Schnittstelle zugeordnet ist,
eine zweite FC-Vermittlungseinrichtung (130), die wenigstens einer auf FC-Technologie basierenden Speichereinrichtung (110, 120) zugeordnet ist, und eine Anpassungseinrichtung (150) zum Anpassen der von der ersten IP-Vermittlungseinrichtung (100) kommenden Daten an das Datenformat der zweiten FC-Vermittlungseinrichtung.(130) und umgekehrt, wobei ein Datenbank-Router (160), ein J2EE-Router (180 und ein SOAP/XML-Router (170) mit der ersten IP-Vermittlungseinrichtung (100) verbunden sind, den Routern (160, 170, 180) jeweils mindestens ein Datenbankserver (165), ein SOAP/XML-Applikationsserver (175) und ein J2EE-Applikationsserver (185) zugeordnet sind, der Datenbankserver (165) mit der Anpassungseinrichtung (150) verbunden ist, und wobei der SOAP/XML-Applikationsserver (175) und der J2EE-Applikationsserver (185) mit dem Datenbank-Router (160) verbunden sind.

2. Kommunikationssystem nach Anspruch 1,
**dadurch gekennzeichnet, dass**
die erste IP-Vermittlungseinrichtung (100) Anwendungsservern (40, 60, 70, 80, 90) mit wenigstens einer iSCSI- und/oder CIFS-Schnittstelle zugeordnet ist.

3. Kommunikationssystem nach Anspruch 1 oder 2,
**dadurch gekennzeichnet, dass**
der Datenbank-Router (160), der SOAP/XML-Router (170) und der J2EE-Router (180) mit einer anderen Datenverwaltungseinrichtung verbunden sein können.

4. Kommunikationssystem nach einem der Ansprüche 1 bis 3,
**dadurch gekennzeichnet, dass**
der zweiten FC-Vermittlungseinrichtung (130) wenigstens eine Datensicherungseinrichtung (140) zugeordnet ist.

5. Kommunikationssystem nach einem der Ansprüche 1 bis 4,
**dadurch gekennzeichnet, dass**
die Datenverwaltungseinrichtung (50) eine, vorzugsweise auf Regeln basierende Datenverwaltungseinheit (190) zum Wiederherstellen von Daten, zur Protokollierung des Datenverkehrs, zur Durchführung einer Datensicherung auf einer Datensicherungseinrichtung während des Ausführens einer Anwendung auf einem oder mehreren der Anwendungsserver (40, 60, 70, 80, 90) und/oder zur Abrechnung angeforderter Dienste, zur Optimierung der Speichereinrichtungen aufweist.

6. Kommunikationssystem nach einem der Ansprüche 1 bis 5,
**dadurch gekennzeichnet, dass**
die Datenverwaltungseinrichtung (50) eine zweite IP-Vermittlungseinrichtung (210) aufweist, die wenigstens einer auf IP-Technologie basierenden Speichereinrichtung (200) zugeordnet ist, und
eine Anpassungseinrichtung (150) zum Anpassen der von der ersten FC-Vermittlungseinrichtung (30) kommenden Daten an das Datenformat der zweiten IP-Vermittlungseinrichtung 210) und umgekehrt.

7. Kommunikationssystem nach einem der Ansprüche 1 bis 6,
**dadurch gekennzeichnet, dass**
die Anpassungseinrichtungen (150) in getrennten oder in einem gemeinsamen Dateiserver implementiert sind.

## Claims

1. A communications system for managing and providing data, comprising,
at least one data management apparatus (50), multiple clients (15, 45, 65, 75, 85, 95), each of which is connected to an application server (10, 40, 60, 70, 80, 90) that is able to access the data management apparatus (50) via an FC-based interface or via an IP-based interface;
multiple memory devices (110, 120, 140, 200) based on FC (Fibre Channel) and IP (Internet Protocol) technology, which are in communication with the data management apparatus (50), the data management apparatus (50) having the following features:
a first FC switching apparatus (30), which is assigned to at least one application server (10) having an FC-based interface;
a first IP switching apparatus (100), which is assigned to an application server (40) having a database interface, an application server (60) having a SOAP/XML interface and an application server (70) having a J2EE interface;
a second FC switching apparatus (130), which is assigned to at least one FC-technology-based memory apparatus (110, 120); and an adapter apparatus (150) for adapting the data received from the first IP switching apparatus (100) to the data format of the second FC switching apparatus (130) and vice versa, whereby a database router (160), a J2EE router (180) and a SOAP/XML router (170) are connected to the first IP switching apparatus (100), at least one database server (165), one SOAP/XML application server (175) and one J2EE application server (185) are connected to each of the routers (160, 170, 180), the data base server (165) is connected to the adapter apparatus (150), and whereby the SOAP/XML application server (175) and the J2EE application server (185) are connected to the database server (160).

2. The communications system according to Claim 1,
**characterized in that**
the first IP switching apparatus (100) is assigned to application servers (40, 60, 70, 80, 90) having at least one iSCSI and/or CIFS interface.

3. The communications system according to Claim 1 or 2,
**characterized in that**
the database router (160), the SOAP/XML router (170) and the J2EE router (180) are connectable to another data management apparatus:

4. The communications system according to one of Claims 1 through 3,
**characterized in that**
at least one data backup apparatus (140) is assigned to the second FC switching apparatus (130).

5. The communications system according to one of Claims 1 through 4
**characterized in that**
the data management apparatus (50) includes a preferably rule-based data management unit (190) for recovering data, for logging the data traffic, for performing a data backup to a data backup apparatus while an application is running on one or more of the application servers (40, 60, 70, 80. 90) and/or for billing requested services, for optimizing the memory apparatuses.

6. The communications system according to one of Claims 1 through 5,
**characterized in that**
the data management apparatus (50) includes a second IP-based data management apparatus (210), which is assigned to at least one IP-technology-based memory apparatus (200); and includes an adapter apparatus (150) for adapting the data received from the first FC switching apparatus (30) to the data format of the second IP switching apparatus (210) and vice versa.

7. The communications system according to one of Claims 1 through 6,
**characterized in that**,
the adapter apparatuses (150) are implemented in separate file servers or in a shared file server.

## Revendications

1. Système de communication pour la gestion et la mise à disposition de données, comportant au moins un dispositif de gestion de données (50), plusieurs clients (15, 45, 65, 75, 85, 95), connectés chacun à un serveur d'application (10, 40, 60, 70, 80, 90) ayant accès au dispositif de gestion de données (50) par l'intermédiaire d'une interface FC ou d'une interface IP,
plusieurs dispositifs de mémoire (110, 120, 140, 200) basés sur la technologie FC (Fiber Channel) et IP (Internet Protocol), reliés au dispositif de gestion de données (50),
le dispositif de gestion de données (50) présentant les caractéristiques suivantes :
un premier commutateur FC (30) affecté à au moins un serveur d'application (10) comportant une interface FC,
un premier commutateur IP (100) affecté à un serveur d'application (40) comportant une interface de base de données, à un serveur d'application (60) comportant une interface SOAP/XML et à un serveur d'application (70) comportant une interface J2EE, un deuxième commutateur FC (130) affecté à au moins un dispositif de mémoire (110, 120) basé sur la technologie FC, et un adaptateur (150) pour adapter les données provenant du premier commutateur IP (100) au format de données du deuxième commutateur FC (130) et vice-versa, un routeur de base de données (160), un routeur J2EE (180) et un routeur SOAP/XML (170) étant connectés au premier commutateur IP (100), au moins un serveur de base de données (165), et au moins un serveur d'application SOAP/XML (175) et au moins un serveur d'application J2EE (185) étant respectivement affectés à chacun des routeurs (160, 170, 180), le serveur de base de données (165) étant connecté à l'adaptateur (150), et le serveur d'application SOAP/XML (175) et le serveur d'application J2EE (185) étant connectés au routeur de base de données (160).

2. Système de communication selon la revendication 1,
**caractérisé en ce que**
le premier commutateur IP (100) est affecté à des serveurs d'applications (40, 60, 70, 80, 90) comportant au moins une interface iSCSI et/ou CIFS.

3. Système de communication selon l'une des revendications 1 ou 2,
**caractérisé en ce que**
le routeur de base de données (160), le routeur SOAP/XML (170) et le routeur J2EE (180) peuvent être reliés à un autre dispositif de gestion de données.

4. Système de communication selon l'une des revendications 1 à 3,
**caractérisé en ce que**
au moins un dispositif de sauvegarde de données (140) est affecté au deuxième commutateur FC (130).

5. Système de communication selon l'une des revendications 1 à 4,
**caractérisé en ce que**
le dispositif de gestion de données (50) comporte une unité de gestion de données (190), de préférence basée sur des règles, pour le rétablissement de données, pour l'enregistrement du trafic de données, pour la réalisation d'une sauvegarde de données dans un dispositif de sauvegarde de données pendant l'exécution d'une application sur un ou plusieurs des serveurs d'application (40, 60, 70, 80, 90), et/ou pour la facturation de services demandés, pour l'optimisation des dispositifs de mémoire.

6. Système de communication selon l'une des revendications 1 à 5,
**caractérisé en ce que**
le dispositif de gestion de données (50) comporte un deuxième commutateur IP (210) affecté à au moins un dispositif de mémoire (200) basé sur la technologie IP, et un adaptateur (150) pour adapter les données provenant du premier commutateur FC (30) au format de données du deuxième commutateur IP (210) et vice-versa.

7. Système de communication selon l'une des revendications 1 à 6,
**caractérisé en ce que**
les adaptateurs (150) sont mis en oeuvre dans des serveurs de fichiers séparés ou dans un serveur de fichiers commun.
